# FASCICULE DE BREVET EUROPEEN

(11) **EP 0 477 070 B1**
(45) Date de publication et mention de la délivrance du brevet: **30.11.1994**
(21) Numéro de dépôt: 91402430.2
(22) Date de dépôt: 13.09.1991
(51) Int. Cl.: C03B 33/04, B26F 3/00, B24C 1/04

(54) **Préparation de plaques de verre façonnées avec commande numérique**
Herstellung von verarbeitetem Glasscheiben mit numerischer Steuerung
Making of worked glass-sheets with numerical command

(30) Priorité: 19.09.1990 FR 9011531
(43) Date de publication de la demande: 25.03.1992
(73) Titulaire: SAINT-GOBAIN VITRAGE INTERNATIONAL, 92400 Courbevoie (FR)
(72) Inventeur: Lecourt, Jean, F-75016 Paris (FR)
(74) Mandataire: Muller, René

(56) Documents cités:
- DE-A- 3 631 512
- FR-A- 2 567 784
- GB-A- 2 139 615
- GB-A- 2 164 879
- GB-A- 2 164 880
- GB-A- 2 165 174

## Description

L'invention concerne les techniques de découpe et de façonnage du verre plat selon un contour donné grâce à une commande numérique.

Lorsqu'on désire produire des objets en verre, plat ou bombé, en séries importantes pour qu'ils soient utilisés tels quels, comme le plus souvent en ameublement, ou après traitement ultérieur tel que le bombage, la trempe ou le feuilletage, comme c'est le cas dans l'industrie automobile, on utilise des machines qui réalisent automatiquement les diverses opérations. Il s'agit dans un premier temps de découper une plaque de verre plat, d'abord au contour polygonal qu'on appelle "primitif" pour lui donner ensuite une forme définie aux contours arrondis dont les bords sont ensuite meulés lors du "façonnage". L'invention concerne ces deux dernières opérations, découpe en forme et façonnage.

Il est connu de programmer le déplacement des outils de découpe ou de façonnage du verre plat non pas à l'aide d'un gabarit que suit mécaniquement un guide solidaire de l'outil mais grâce à un microprocesseur dont la mémoire garde toutes les informations nécessaires au déplacement de l'outil par rapport au verre selon un itinéraire et un programme de vitesses définis. Il est également connu d'utiliser une commande numérique pour déplacer du même mouvement relatif, deux outils différents, l'un pour la découpe, l'autre pour le façonnage, les deux outils étant associés mécaniquement tandis qu'ils effectuent un déplacement par rapport à deux plaques de verre, elles aussi mécaniquement solidaires l'une de l'autre et pouvant d'ailleurs participer elles aussi au mouvement relatif outils-verres. On obtient ainsi simultanément d'une part le traçage d'un trait de découpe sur un primitif et d'autre part le meulage des bords d'une deuxième plaque de verre préalablement découpée. Cependant, la phase intermédiaire entre les deux opérations précédentes, le détourage de la plaque de verre tracée doit être effectuée, elle, de la manière traditionnelle qui comprend les trois étapes suivantes : traçage de traits de découpe radiaux entre la trace déjà effectuée et le bord du primitif, puis ouverture des traits de découpe par un effet mécanique, opération appelée rompage, et enfin, évacuation des morceaux provenant de la périphérie de la plaque. La première plaque de verre, ainsi préparée, est alors disponible pour être transférée sur le poste de façonnage.

L'invention se donne pour tache de simplifier cette phase intermédiaire et même pratiquement de la supprimer.

En d'autres termes, la technique de l'invention permet simultanément de découper une première feuille de verre et de meuler une deuxième feuille de verre déjà découpée sans effectuer l'opération de rompage qui nécessiterait des réglages délicats lorsqu'on change de modèle. En un mot, l'invention permet de bénéficier pleinement des avantages de la commande numérique, sans autre servitude, lorsqu'on change de modèle, que de donner les instructions voulues au microprocesseur et de procéder à des modifications légères des dispositifs de la machine.

Il est connu d'associer grâce à la mécanique et aux procédés informatiques des machines pour effectuer d'une part le traçage d'un trait de découpe sur un primitif et d'autre part, le meulage des bords de verre découpé en forme. Entre ces deux postes de travail, un troisième automate permet de détourer le verre. C'est ainsi que le brevet européen EP-A-0 217 658 décrit une telle machine triple à commande numérique. On y trouve des outils traditionnels, molette pour la découpe et meule diamantée à gorge pour le façonnage. Les verres traités simultanément sont au nombre de trois, un primitif sur lequel on tracera à l'aide de la molette le trait de découpe à la forme voulue, le primitif avec son contour en forme déjà tracé et sur lequel seront tracés de nouveaux traits de découpe radiaux et où on procédera au rompage et à l'évacuation des chutes périphériques et enfin le verre découpé à la forme voulue sur lequel sera effectué le meulage des arêtes.

Les premiers et troisièmes verres sont supportés par des tables solidaires de la même poutre support inférieure. Le premier outil de découpe et l'outil de façonnage sont également solidarisés. En effet ils sont suspendus à une poutre commune supérieure et montés ou animés grâce à des servo-mécanismes, de telle manière que leur point d'action à chacun, soit toujours à la verticale du même point de la poutre commune supérieure.

On conçoit que grâce à cette double condition, solidarité des verres d'une part, solidarité des outils d'autre part, dans la mesure où les verres sont placés, avant le début du travail à des emplacements correspondants, on peut, grâce à une seule programmation informatique, obtenir une conformité satisfaisante de la forme obtenue et de la forme souhaitée. Le mouvement relatif des outils et des plaques de verre est obtenu grâce à deux déplacements orthogonaux dans des plans horizontaux, déplacement longitudinal pour la poutre commune supérieure (axe des x) et déplacement transversal (axe des y) pour la poutre support inférieure. Les outils, spécialement la meule, peuvent se déplacer grâce à des servo-moteurs de manière à garantir le bon positionnement du point d'action, immuable par rapport à la poutre commune supérieure, comme on l'a vu, et également la bonne direction (la droite qui joint le point d'action de la meule à son centre doit être sensiblement perpendiculaire à la tangente du contour de la plaque de verre au point d'action). Cependant, dans l'art antérieur, la phase intermédiaire qui comprend le traçage des traits de découpe radiaux, le rompage et l'évacuation des chutes, si elle est bien située sur un poste intermédiaire de la même machine nécessite une programmation et une série d'opérations mécaniques qui n'ont aucun rapport avec celles du premier et du troisième poste.

Par ailleurs, il est connu de procéder à la découpe de matériaux divers, de verre plat en particulier à l'aide d'un jet liquide, de l'eau le plus souvent, dans lequel des poudres abrasives sont en suspension. On utilise une buse étroite qui projette de haut en bas, l'eau et la poudre abrasive en suspension avec une pression très élevée supérieure à un milliard de pascals. La buse est placée à proximité de la surface du verre et permet d'enlever la matière sur une largeur faible, de l'ordre du millimètre et sur toute l'épaisseur d'un verre, même épais. Un mouvement relatif buse-verre permet d'obtenir le tracé souhaité. La partie la plus délicate d'un tel dispositif réside dans la neutralisation mécanique et acoustique du jet puissant qui a traversé le verre. Le plus souvent, on place vis à vis du jet, en dessous, un grand bac rempli d'eau sur une grande profondeur, suffisante pour absorber l'énergie avant que le jet d'eau et d'abrasif n'atteigne le fond du bac, qu'autrement, il risquerait de détériorer. Dans d'autres cas, en particulier lorsque c'est la buse qui est mobile et se déplace au-dessus du verre fixe, un récipient spécial, de surface faible, mais de grande profondeur se trouve solidaire mécaniquement de la buse, de l'autre côté du verre. C'est ainsi, par exemple que la demande de brevet européen EP-A-0 223 372 présente un tel dispositif destiné à absorber l'énergie cinétique du jet et à amortir le bruit produit.

D'autres techniques particulières sont spécialement adaptées à la découpe en forme du verre plat ainsi le brevet français FR-A-2 570 637 propose de découper des plaques de verre ébauchées (des "primitifs") à l'aide d'un jet liquide abrasif qui se déplace selon un contour défini. Celui-ci est matérialisé par un gabarit suivi grâce à un palpeur optique lié mécaniquement à la buse haute pression. Un tel système qui fournit un élément de verre plat découpé en forme peut fournir, dans certains cas limités, un vitrage susceptible de supporter sans autre traitement mécanique une opération de bombage et/ou de trempe thermique. Mais, le plus souvent, la qualité du chant obtenue est insuffisante. Par exemple, dans le cas des glaces latérales coulissantes d'une automobile, on devra arrondir le bord découpé dans une deuxième opération de façonnage réalisée sur une autre machine. Il faudra donc reprendre chaque glace et la transporter ailleurs. Toutes ces opérations de manutention sont chères et alourdissent le processus de production.

L'invention propose une machine de traitement du verre plat comportant des installations pour obtenir un contour défini à partir d'une forme polygonale et un poste de travail pour meuler les arêtes du contour ainsi que des moyens pour déplacer du même mouvement relatif par rapport au verre, les outils de découpe et de meulage et également des moyens de commande numérique pour l' ensemble du processus, caractérisée en ce que le contour défini est obtenu par un outil de découpe par jet d'eau. Celui-ci a avantageusement une position fixe par rapport aux moyens de déplacement des outils. L'outil de découpe peut être associé à un bac récepteur situé de l'autre côté du verre. En général, les moyens mécaniques qui supportent le verre lors de la découpe sont escamotables. Par ailleurs, le bras de liaison qui relie l'outil et le bac récepteur peut tourner autour de l'axe de l'outil. Il est également prévu que des moyens de transfert permettent d'entraîner le cadre périphérique.

Dans une variante, le verre est supporté par une table aspirante qui comporte une saignée périphérique correspondant à la trace de l'outil, celle-ci débouchant dans un réservoir. La table comporte par ailleurs des moyens d'aspiration de part et d'autre de la trace de l'outil. Elle a, au moins dans sa partie périphérique, des moyens de transfert pour entraîner le cadre périphérique. Cette table est avantageusement interchangeable.

La machine selon l'invention est telle que la distance entre la buse de l'outil et le verre reste inférieure à 1O mm.

D'autre part, il est prévu qu'un poste de travail supplémentaire permette le perçage de trous dans le verre. Dans ce cas, il est avantageusement réalisé par un jet d'eau à haute pression.

La technique de l'invention présente de nombreux avantages par rapport à l'art antérieur. Parmi ceux-ci, les plus importants sont de permettre l'utilisation intégrale de l'informatique pour commander l'ensemble des opérations nécessaires à la découpe et au façonnage du verre plat. Une conséquence importante est l'automatisation complète de la production, la suppression de la surveillance de la machine et surtout, l'extrême rapidité dans le changement de modèle sur la ligne de production.

Le fonctionnement et les avantages de l'invention apparaîtront clairement grâce à la description et aux figures.
La figure 1 présente le schéma de principe de l'invention,
La figure 2, le système de transport du verre,
La figure 3 présente l'installation en deux vues différentes,
La figure 4 montre une variante avec table de positionnement pour la découpe,
La figure 5 schématise le système de découpe de l'invention.

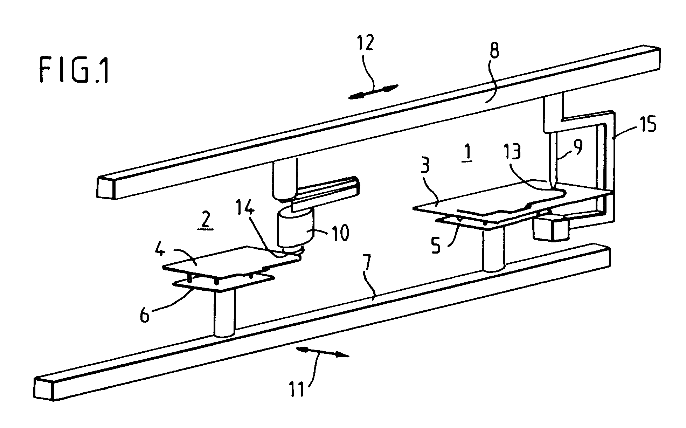

Sur la figure 1, on voit les deux postes de travail 1 et 2, 1 correspond à la découpe par jet d'eau sous haute pression et 2 au poste de façonnage. Les verres 3 et 4 sont portés respectivement par les tables 5 et 6. Ces tables sont elles-mêmes portées par le support commun des verres, en l'occurrence la poutre-support inférieure 7. La poutre commune supérieure 8 qui constitue le porte-outils commun, porte les deux outils, le système de découpe par jet d'eau 9 et le porte-meule 10. La poutre-support inférieure 7 peut se déplacer perpendiculairement à elle-même dans la direction 11 tandis que la poutre commune supérieure 8 se déplace dans sa propre direction et son déplacement est représenté par la flèche 12. Les deux déplacements 11 et 12 sont à l'origine du mouvement relatif des points d'action respectifs 13 et 14 des outils 9 et 10 par rapport aux plaques de verre. Par ailleurs, chacun des deux outils possède un mouvement propre, de rotation pour l'outil de découpe 9 et dans tout le plan pour l'outil 10. Il s'agit de faire tourner le bras 15 qui solidarise les deux parties de l'outil de découpe par jet d'eau 9 de manière que l'outil 9 puisse faire le tour complet de la plaque de verre 3. De l'autre côté, le mouvement propre du portemeule 10 par rapport à la poutre 8 a deux finalités, d'abord garantir que le point d'action 14 soit en permanence en regard du même point de la poutre commune supérieure 8, ensuite permettre à la meule d'agir dans la direction voulue par rapport à la courbure du bord du verre. En général, le centre de la meule est dans le prolongement du rayon de courbure du contour du verre. Tous les mouvements précédents, selon 11 pour la poutre 7, selon 12 pour la poutre 8, le mouvement de rotation pour l'outil de découpe 9 et les mouvements dans les deux directions pour l'outil porte-meule 10 sont régis par une commande numérique. Celle-ci "lit" à chaque instant dans la mémoire du microprocesseur, les cinq vitesses concernées, transmet l'ordre d'exécution aux cinq servo-moteurs et en surveille l'exécution.

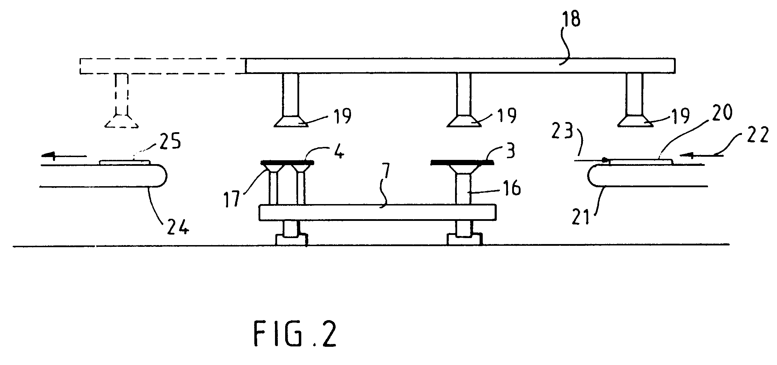

Le principe de l'invention étant acquis, il reste à décrire sa réalisation. Sur la figure 2, on a représenté le circuit suivi par les plaques de verre entre l'entrée et la sortie de la machine de découpe-façonnage selon l'invention. Sur cette figure, les éléments relatifs aux outils 9, 1O ainsi que leur porte-outils commun ne sont pas représentés. En revanche, on y retrouve la poutre-support inférieure 7 qui joue le rôle de support commun des verres. A la différence de la figure 1, le verre n'est pas porté par des tables, mais directement par des ventouses telles que 16 ou 17. Dans la partie supérieure de la figure, on trouve ici une poutre-transporteuse 18 équipée de trois systèmes de ventouses 19. La poutre 18 est représentée en position "entrée". C'est-à-dire que la ventouse la plus à droite est au-dessus du verre 20 qui arrive sur le convoyeur d'entrée 21 dans le sens indiqué par la flèche 22. Le verre 20 est arrêté par la butée 23 qui sert de référence avant. Deux autres systèmes de butées, non représentés sur la figure 2 permettent de situer la plaque de verre, en général trapézoïdale - qu'on appelle "primitif" - exactement à la même place avec une précision de l'ordre de 0,5 mm. En face des deux autres emplacements prévus pour les plaques de verre, en 3 et 4, se trouvent également des ventouses 19. Au début d'un cycle, les trois ventouses descendent simultanément, se posent chacune sur un verre et remontent dans leur position d'origine. Toute la poutre transporteuse 18 se déplace alors d'un pas et le verre 20 vient au-dessus de l'ancienne place du verre 3, celui-ci, au-dessus de l'ancien emplacement du verre 4 et le verre 4 vient, quant à lui, au-dessus du transporteur de sortie. Les trois ventouses descendent alors de nouveau. Les nouveaux verres 3 et 4 sont pris en charge respectivement par les systèmes de ventouses 16 et 17 tandis que le verre 25 est entraîné par le convoyeur de sortie 24. A la fin du cycle, la poutre transporteuse 18 retrouve sa position d'origine dans l'attente qu'un nouveau verre 2O soit en position et que les opérations de découpe et de façonnage soient terminées.

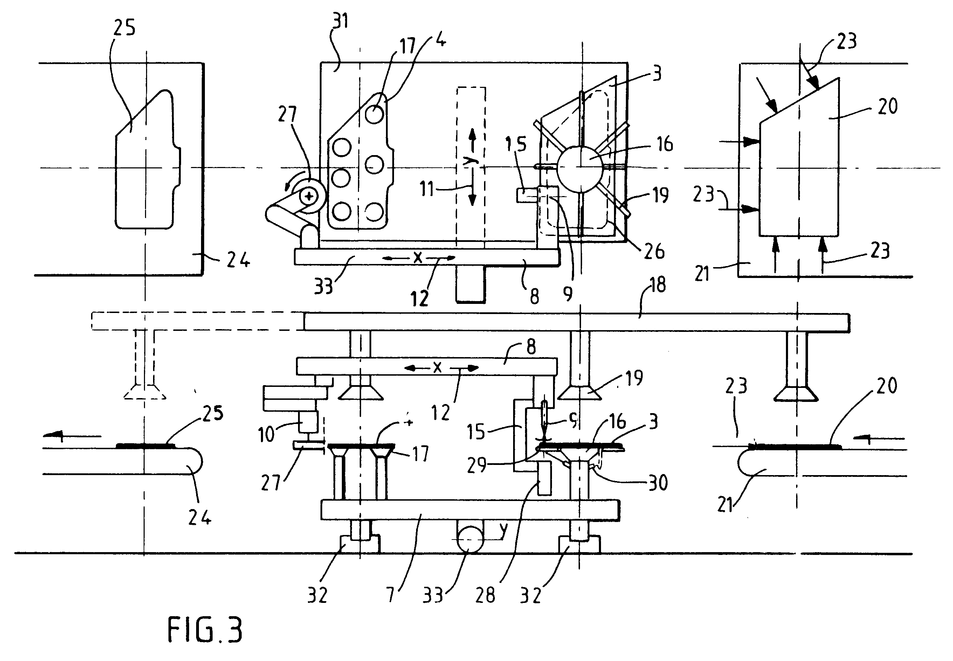

La figure 3 présente l'ensemble des dispositifs permettant de réaliser l'invention. La partie inférieure est une vue latérale et la partie supérieure une vue de dessus. Sur celle-ci on voit les quatre plaques de verre dont il a été question précédemment : en 2O le primitif placé sur le convoyeur d'entrée 21 et en référence sur ses butées 23, en 3 une plaque dont le contour extérieur est le même mais sur laquelle on a représenté, le futur trait de découpe 26 tel qu'il sera réalisé par l'outil 9 ; on voit également la plaque 4 déjà découpée, prête pour le façonnage qui sera exécuté par la meule 27, puis, enfin en 25 la plaque finie, prête à être entraînée par le convoyeur 24.

Sur les deux parties de la figure 3, on voit le système de maintien des plaques de verre 3 et 4. La plaque 4 est maintenue grâce à plusieurs ventouses 17 qui la fixent fermement pendant que la meule à gorge 27 effectue son travail. Le système de maintien de la plaque 3 comporte une ventouse centrale unique 16 mais il est, lui, original. Il a, en effet, en plus du maintien de la plaque, avant, pendant et après la découpe, d'autres fonctions à remplir : pendant toute l'opération de découpe, il doit tenir en place la partie périphérique en cours de séparation, mais il doit également faciliter le passage de l'outil de découpe 9. Celui-ci est le plus souvent - comme on l'a représenté ici - accompagné de son bac récepteur 28 par l'intermédiaire du bras 15. Ce bac récepteur 28 est destiné à recueillir le jet d'eau avec l'abrasif en suspension et les menus débris de verre qu'il enlève à la plaque 3. Par ailleurs, il doit absorber l'énergie résiduelle pour que le jet ne puisse continuer à dégrader tout ce qu'il rencontre, il doit également amortir au maximum les vibrations sonores engendrées. On donne avantageusement au bac récepteur 28 pour réaliser ces diverses fonctions, la forme décrite dans la demande de brevet européenne EP 0 223 372. Pour supporter la partie périphérique de la plaque pendant l'opération de découpe, on a prévu le système représenté sur la figure 3. Il s'agit de barres de soutien 29 articulées et qui peuvent donc s'escamoter grâce à des vérins 30, lors du passage de l'outil. Immédiatement après, elles reprennent leur position supérieure pour soutenir la bande de verre périphérique nouvellement formée. Dans cette forme de réalisation de l'invention, le programme de commandes numériques des opérations comporte donc des instructions pour que les vérins 30 permettent aux barres de soutien 29 de s'éclipser à l'instant exact où c'est nécessaire puis de reprendre leur position horizontale, immédiatement après.

Une fois la périphérie du verre complètement séparée de la partie centrale, il reste à l'évacuer, cette opération se fait pendant le transfert des plaques 20, 3, 4 et 25. Des bandes transporteuses non représentées placées sous la table et agissant perpendiculairement à la direction X évacuent les fragments. Sur la figure 3, on voit également en 31, dans la représentation vue de dessus, le bac destiné à recevoir la suspension aqueuse qui a été projetée sur la meule 27 lors du façonnage.

Sur cette même figure 3, on voit en 32 des guides en forme de rigole qui autorisent le déplacement des supports de verre dans la direction 11. Ce déplacement est obtenu grâce au système de vis-écrou 33.

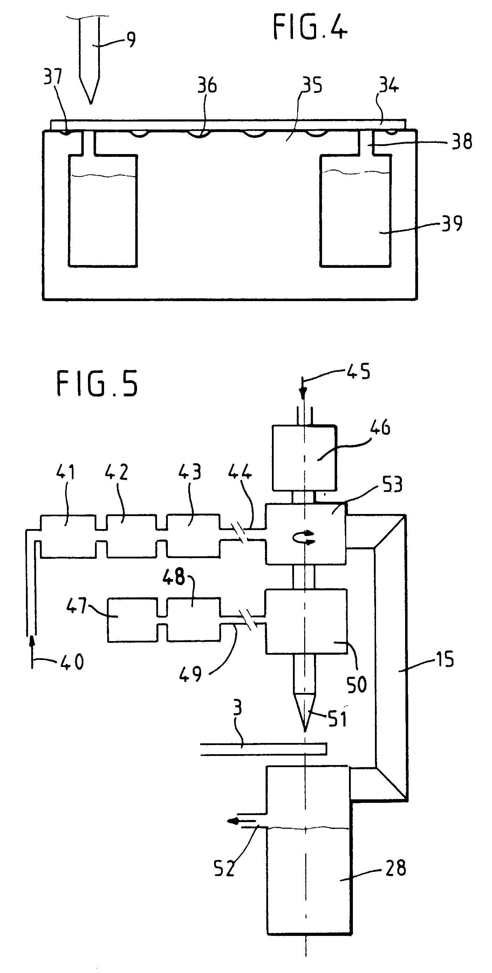

Le mode de réalisation décrit ci-dessus permet d'utiliser pour des primitifs de formes voisines, un système identique constitué des ventouses 17 pour la plaque 4, de la ventouse 16 et des barres de soutien 29 avec leurs vérins 30 pour la plaque 3. Cependant on a également prévu un système différent qui permet de traiter des plaques de verre de forme quelconque sur l'installation. Dans cette variante de l'invention, on exploite le même principe que sur la figure 1 : des tables différentes pour chaque type de vitrage sont utilisées et lorsqu'on change de modèle, on procède simplement au changement des tables supports des plaques 3 et 4. La table qui supporte le verre 4 ne présente pas de caractéristiques particulières, elle doit simplement se positionner rapidement et avec une bonne précision à son emplacement sur le support commun des verres, par exemple la poutre support inférieure 7. Elle comporte des ventouses dont la position est adaptée à chaque forme de vitrage. En revanche, l'autre support est d'une conception toute différente. Un exemple de réalisation de la table destinée à supporter le verre pendant sa découpe est représenté figure 4. Ce type de support permet de maintenir très fermement la plaque de verre pendant l'opération de découpe. En effet, cette plaque 34 repose par toute sa surface sur la table 35. Cette table comporte des cavités aspirantes 36 qui maintiennent le verre en place. Certaines de ces cavités, telles que 37 se trouvent à la périphérie de la plaque, là où se trouvent, à la fin du processus, les morceaux à évacuer. Entre ces deux régions - centre et périphérie - on a prévu une saignée périphérique 38 qui correspond à la trace de l'outil 9 et qui débouche sur un réservoir 39 qui a la même fonction que le bac récepteur 28. Ainsi, l'outil 9 est beaucoup plus mobile et les problèmes d'absorption d'énergie mécanique et acoustique peuvent être résolus plus complètement grâce au grand réservoir 39. Par ailleurs, la plaque 34 est très stable ce qui garantit la précision du tracé de l'outil 9. Dans une variante de ce système, on a également prévu, en particulier au voisinage des cavités aspirantes 37, des roulettes motrices ou des courroies transporteuses qui entraînent le cadre périphérique, lorsque la partie centrale a elle-même, été évacuée et qui sont éclipsées lorsqu'elles sont inactives.

Sur la figure 5, on voit le circuit de l'eau et de l'abrasif en suspension. Ce circuit est peu différent, que le système retenu soit celui du bac récepteur mobile 28 ou celui du réservoir fixe 39. Sur la figure, c'est le bac récepteur mobile qui est représenté. On voit en 4O, l'arrivée avec un débit de 2 à 4,5 litres par minute. En 41, on a schématisé un filtre, en 42, la pompe basse pression et en 43, la pompe haute pression. La liaison souple représentée en 44 est un tuyau d'un diamètre qui est, par exemple de 9 mm. Le système fournissant la pression peut être relativement éloigné de la machine de découpe, jusqu'à 80 mètres. En 45, on voit l'arrivée d'air comprimé destiné aux commandes pneumatiques des vannes, en 46, le dispositif de commande d'ouverture - fermeture. A l'étage inférieur sur la figure, on voit l'alimentation en abrasif avec le réservoir 47, le doseur 48 et le tuyau souple de liaison 49 qui a un diamètre de, par exemple, 6 mm, et dont la longueur peut atteindre 5 mètres. L'abrasif doit avoir des grains de dimension moyenne entre 0,2 et 0,5 mm. La chambre de mélange 50 se trouve juste au-dessus de la buse d'éjection 51. La distance entre celle-ci et le verre est de préférence maintenue inférieure à 1O mm. Toujours dans le circuit des fluides, on trouve de l'autre côté du verre le bac récepteur 28 qui est mécaniquement lié à la partie supérieure par le bras 15. Ce bac comprend un trop-plein 52 par où le liquide chargé de l'abrasif et des débris de verre pulvérisés est évacué. Le dernier élément représenté est le système d'orientation 53 qui, grâce à un servo moteur, permet au bras 15 de contourner la plaque de verre 3.

Les consommations sont de l'ordre de 2 à 4,5 litres par minute pour l'eau et de O,5 à 1 Kg par minute pour l'abrasif.

La machine telle qu'elle a été décrite jusqu'à présent comporte entre le convoyeur d'entrée et le convoyeur de sortie deux postes de travail. Son encombrement est, de ce fait, beaucoup moins grand que celui des machines à commandes numériques lorsque la découpe s'y fait à la molette avec l'opération de détourage du verre séparée.

L'invention permet de transformer une machine ancienne à trois postes utilisant la molette en une machine à deux postes avec découpe au jet d'eau, l'adaptation n'est pas compliquée et alors dans ce dernier cas l'on utilise avantageusement le poste de travail libéré pour réaliser - toujours par la technique de la découpe par jet d'eau - des perçages à l'aide d'un dispositif comportant une buse et un bac récepteur mais qui peut être déplacé par rapport au verre dans les deux directions pour effectuer des perçages de forme quelconque. On dispose alors d'une machine entièrement automatique qui permet de transformer, sans intervention humaine, un primitif en un vitrage qui est - par exemple dans le cas d'un latéral automobile équipé de trous - prêt à être trempé sans autre manipulation.

Les dispositifs et le procédé de l'invention permettent ainsi de disposer d'une technique simple et - en particulier, dans la variante comportant une table - support pour le verre qui est découpé, parfaitement adapté à la commande numérique puisque les seules informations à communiquer à la machine à un instant donné sont les positions des différents axes ainsi que celles des points de soutien. D'autre part, le changement du modèle produit pour le remplacer par un autre s'effectue dans la première variante par un simple changement du logiciel de commande (avec tout de même un réglage adapté des butées du convoyeur d'entrée). On dispose ici d'un procédé homogène. C'est ainsi que les vitesses d'avancement des deux outils sont optimales ; alors que dans les machines simultanées à commande numérique, le traçage à la molette pourrait s'effectuer à des vitesses plusieurs fois plus grandes que le meulage des chants on est obligé de ralentir ce traçage pour être synchrone avec le façonnage, et cela contraint à des réglages particuliers, la technique de l'invention, elle, fait travailler les deux outils à leur vitesse naturelle. Un autre inconvénient du système classique réside dans le fait qu'une molette a une seule direction dans laquelle elle doit rouler, ce qui oblige, soit à la guider en permanence par un servo moteur, ou bien à lui permettre d'être tirée grâce à une conception mécanique adaptée. Ce type de servitude n'est pas nécessaire avec l'outil de découpe par jet d'eau qui, lui, peut travailler dans toutes les directions. L'avantage de n'avoir que deux postes de travail au lieu de trois a déjà été évoqué. Cette caractéristique peut être exploitée en installant sur la même machine. Un dispositif de perçage qui est avantageusement équipé d'outils à jet d'eau sous pression qui sont alors alimentés à partir des mêmes sources de fluides que l'outil de découpe.

## Revendications

1. Machine de traitement du verre plat comportant des installations pour obtenir un contour défini à partir d'une forme polygonale (3) et un poste de travail (2) pour meuler les arêtes du contour ainsi que des moyens (7,8) pour déplacer du même mouvement relatif par rapport au verre, les outils de découpe (9) et de meulage (10) et également des moyens de commande numérique pour l'ensemble du processus, caractérisée en ce que le contour défini est obtenu par un outil de découpe par jet d'eau (9).

2. Machine selon la revendication 1, caractérisée en ce que l'outil de découpe par jet d'eau (9) a une position fixe par rapport aux moyens de déplacement des outils (8).

3. Machine selon la revendication 2, caractérisée en ce que l'outil de découpe (9) est associé à un bac récepteur (28) situé de l'autre côté du verre (3).

4. Machine selon la revendication 3, caractérisée en ce que les moyens mécaniques (29) qui supportent le verre (3) lors de la découpe sont escamotables.

5. Machine selon la revendication 3, caractérisée en ce que le bras de liaison (15) qui relie l'outil (9) et le bac récepteur (28) peut tourner autour de l'axe de l'outil (9).

6. Machine selon l'une des revendications 3 à 5 caractérisée en ce que des moyens de transfert permettent d'entrainer le cadre périphérique.

7. Machine selon la revendication 1 ou 2, caractérisée en ce que le verre (3) est supporté par une table aspirante (35).

8. Machine selon la revendication 7, caractérisée en ce que la table (35) comporte une saignée périphérique (38) correspondant à la trace de l'outil (9) qui débouche dans un réservoir (39).

9. Machine selon la revendication 7, caractérisée en ce que la table (35) comporte des moyens d'aspiration (36, 37) de part et d'autre de la trace de l'outil (9).

10. Machine selon la revendication 7, caractérisée en ce que la table (35) comporte, au moins dans sa partie périphérique des moyens de transfert pour entraîner le cadre périphérique.

11. Machine selon la revendication 7, caractérisée en ce que la table (35) est interchangeable.

12. Machine selon l'une des revendications précédentes, caractérisée en ce que la distance entre la buse (51) de l'outil (9) et le verre (3) est inférieure à 10 mm.

13. Machine selon l'une des revendications précédentes, caractérisée en ce qu'un poste de travail supplémentaire permet le perçage de trous dans le verre.

14. Machine selon la revendication 13, caractérisée en ce que le perçage des trous est réalisé par un jet d'eau à haute pression.

## Claims

1. Machine for treating flat glass comprising installations for producing a defined contour from a polygonal shape (3) and a work station (2) for grinding the edges of the contour and also means (7, 8) for displacing, with the same movement relative to the glass, the cutting (9) and grinding (10) tools, and also numerical control means for the whole of the process, characterized in that the defined contour is obtained by a cutting tool operating by water jet (9).

2. Machine according to Claim 1, characterized in that the water jet cutting tool (9) has a fixed position relative to the displacement means for the tools (8).

3. Machine according to Claim 2, characterized in that the cutting tool (9) is associated with a receiving bath (28) situated on the other side of the glass (3).

4. Machine according to Claim 3, characterized in that the mechanical means (29) which support the glass (3) during cutting are retractable.

5. Machine according to Claim 3, characterized in that the connecting arm (15) which connects the tool (9) and the receiving bath (28) can revolve about the axis of the tool (9).

6. Machine according to one of Claims 3 to 5, characterized in that transfer means enable the peripheral frame to be entrained.

7. Machine according to Claim 1 or 2, characterized in that the glass (3) is supported by a suction table (35).

8. Machine according to Claim 7, characterized in that the table (35) comprises a peripheral slot (38) corresponding to the path of the tool (9) which leads into a reservoir (39).

9. Machine according to Claim 7, characterized in that the table (35) comprises suction means (36, 37) on either side of the path of the tool (9).

10. Machine according to Claim 7, characterized in that the table (35) comprises, at least in its peripheral portion, transfer means for entraining the peripheral frame.

11. Machine according to Claim 7, characterized in that the table (35) is interchangeable.

12. Machine according to any one of the preceding Claims, characterized in that the distance between the nozzle (51) of the tool (9) and the glass (3) is less than 10 mm.

13. Machine according to one of the preceding Claims, characterized in that a supplementary work station enables holes to be pierced in the glass.

14. Machine according to Claim 13, characterized in that the piercing of the holes is carried out by a high pressure water jet.

## Patentansprüche

1. Maschine zur Bearbeitung von Flachglas, die Vorrichtungen für die Herstellung einer definierten Kontur aus einer polygonalen Form (3) und eine Bearbeitungsstation (2) zum Abschleifen der Konturkanten sowie Mittel (7, 8) für dieselbe Relativbewegung des Schneid- (9) und Schleif-werkzeugs (10) in bezug auf das Glas und auch numerische Steuerungsmittel für das gesamte Verfahren umfaßt, **dadurch gekennzeichnet, daß** die definierte Kontur durch ein Wasserstrahl-Schneidwerkzeug (9) erhalten wird.

2. Maschine nach Anspruch 1, **dadurch gekennzeichnet, daß** das Wasserstrahl-Schneidwerkzeug (9) bezüglich der Bewegungs-mittel (8) der Werkzeuge eine feststehende Position einnimmt.

3. Maschine nach Anspruch 2, **dadurch gekennzeichnet, daß** das Schneidwerkzeug (9) mit einem auf der anderen Seite des Glases (3) befindlichen Aufnahmebehälter (28) verbunden ist.

4. Maschine nach Anspruch 3, **dadurch gekennzeichnet, daß** die mechanischen Mittel (29), die das Glas (3) während des Schneidvorgangs halten, entfernbar sind.

5. Maschine nach Anspruch 3, **dadurch gekennzeichnet, daß** der Verbindungsarm (15), welcher das Werkzeug (9) mit dem Aufnahmebehälter (28) verbindet, um die Achse des Werk-zeugs (9) drehbar ist.

6. Maschine nach einem der Ansprüche 3 bis 5, **dadurch gekennzeichnet, daß** die Verlegung des Umfangsrahmens durch Übertragungsmittel ermöglicht wird.

7. Maschine nach Anspruch 1 oder 2, **dadurch gekennzeichnet, daß** das Glas (3) von einem Ansaugtisch (35) getragen wird.

8. Maschine nach Anspruch 7, **dadurch gekennzeichnet, daß** der Tisch (35) einen Umfangsspalt (38) enthält, welcher der Bahn des Werkzeugs (9) entspricht und in einen Vorratsbehälter (39) mündet.

9. Maschine nach Anspruch 7, **dadurch gekennzeichnet, daß** der Tisch (35) an beiden Seiten der Bahn des Werkzeugs (9) Ansaugmittel (36, 37) enthält.

10. Maschine nach Anspruch 7, **dadurch gekennzeichnet, daß** der Tisch (35) wenigstens in seinem Umfangsbereich Übertragungsmittel für die Verlegung des Umfangsrahmens enthält.

11. Maschine nach Anspruch 7**, dadurch gekennzeichnet, daß** der Tisch (35) auswechselbar ist.

12. Maschine nach einem der vorhergehenden Ansprüche, **dadurch gekennzeichnet, daß** der Abstand zwischen der Düse (51) des Werkzeugs (9) und dem Glas (3) kleiner als 10 mm ist.

13. Maschine nach einem der vorhergehenden Ansprüche, **dadurch gekennzeichnet, daß** durch eine zusätzliche Bearbeitungsstation das Bohren von Löchern in das Glas ermöglicht wird.

14. Maschine nach Anspruch 13, **dadurch gekennzeichnet, daß** das Bohren von Löchern mit einem Hochdruck-Wasserstrahl erfolgt.
